# DEMANDE DE BREVET EUROPEEN

(11) **EP 2 597 886 A1**
(43) Date de publication de la demande: **29.05.2013**
(21) Numéro de dépôt: 12155396.0
(22) Date de dépôt: 14.02.2012
(51) Int. Cl.: H04N 21/472, H04N 21/84, H04N 21/845, H04N 21/482, H04N 21/6543, H04N 21/81, H04N 21/458, H04N 21/235, H04N 21/262

(54) **Procédé de transmission de programmes de vidéo à la demande de type " Push " et décodeur associé**

(30) Priorité: 24.11.2011 FR 1160759
(71) Demandeur: Logiways France, 75015 Paris (FR)
(72) Inventeur: Benardeau, Christian, 77600 BUSSY SAINT GEORGES (FR); Lelegard, Thierry, 75015 PARIS (FR)
(74) Mandataire: Jacobson, Claude

(57) **Abrégé**

Procédé de transmission de programmes de VOD « Push », comprenant les étapes de :
- transmission depuis un serveur distant (2) sur un réseau de diffusion (3) et à destination d'une pluralité de décodeurs (4) d'un flux de diffusion comportant des unités de programmes de VOD « Push »,
- stockage des unités de programme en mémoire par chaque décodeur ;
le flux de diffusion comportant une première unité de programme comprenant un premier contenu audio/vidéo, une deuxième unité de programme comprenant un deuxième contenu audio/vidéo, et une troisième unité de programme comprenant une liste comprenant au moins des identifiants des première et deuxième unités,

selon lequel lorsque le décodeur reçoit une commande de lecture de la troisième unité de programme, il procède à l'affichage sur l'écran successivement des premier et deuxième contenus audio/vidéos, en fonction de données présentes dans un champ de métadonnées de la troisième unité de programme.

## Description

La présente invention concerne un procédé de transmission de programmes de vidéo à la demande de type « Push », comprenant les étapes selon lesquelles :
- on transmet depuis un serveur distant sur un réseau de diffusion et à destination d'une pluralité de décodeurs aptes à être connectés à des écrans d'affichage, un flux de diffusion comportant des unités de programmes de vidéo à la demande de type « Push », chaque unité de programme comprenant au moins un premier champ respectif de métadonnées comportant un identifiant d'unité et optionnellement un deuxième champ comprenant un contenu audio/vidéo,
- les unités de programme sont stockées en mémoire par chaque décodeur.

Il existe trois types de service de vidéo à la demande (en anglais « Video on Demand »), appelée encore VoD ci-après mis en oeuvre entre un serveur de diffusion et un décodeur associé à un écran TV qui reçoit une vidéo diffusée depuis le serveur de diffusion sur un réseau de diffusion, par exemple hertzien.

Dans le service de vidéo à la demande dit « en direct », en anglais « Live VoD », l'utilisateur sélectionne un contenu et regarde le contenu pendant que son boîtier décodeur le reçoit en provenance d'un serveur distant fournisseur de services. Il s'agit d'une diffusion en continu (en anglais « streaming ») vers un utilisateur particulier qui a sélectionné ce contenu. L'utilisateur peut sélectionner des instructions de type « pause », « stop », « retour en arrière », « revoir à partir du début », « saut en avant » etc. Chacune de ces instructions est transmise à destination du serveur, qui adapte en temps réel le contenu diffusé en fonction des instructions transmises. Pour ce type de VoD, il est nécessaire de disposer de réseaux à très large bande avec une voie de retour, présentant des latences très faibles pour fournir un service de bonne qualité.

Dans le service de VoD de type « Pull VoD », l'utilisateur sélectionne un contenu, l'achète et requiert un téléchargement du contenu sélectionné depuis un serveur distant fournisseur. Une fois téléchargé par le décodeur, le contenu est stocké localement au décodeur, avant d'être visualisé. Pour ce type de VoD, il est nécessaire de disposer de réseaux à large bande avec une voie de retour et le décodeur doit disposer d'une mémoire de stockage du contenu téléchargé.

Dans le service de VoD de type « Push», un opérateur effectue une sélection de contenus et « pousse » tous ces contenus via un réseau de diffusion vers tous les décodeurs, dans lesquels les contenus sont alors sauvegardés. A tout instant, l'utilisateur peut choisir un des contenus et le regarder, sous réserve qu'il y ait droit, par exemple s'il a souscrit un abonnement lui donnant accès à ce contenu choisi, ou sous réserve qu'il l'achète préalablement. Un réseau de diffusion classique unidirectionnel peut être utilisé et les technologies actuelles permettent aux décodeurs de disposer de grosses capacités de stockage.

Toutefois dans les systèmes actuels VoD de type « Push», il est difficile de prendre en compte dans les décodeurs des évolutions concernant les programmes déjà stockées ou de définir de nouveaux types et de nouvelles structures de programmes.

A cet effet, suivant un premier aspect, l'invention a pour objet un procédé de transmission du type précité, **caractérisé en ce que** le flux de diffusion comporte une première unité de programme comprenant un premier identifiant d'unité et un premier contenu audio/vidéo, une deuxième unité de programme comprenant un deuxième identifiant d'unité et un deuxième contenu audio/vidéo, et une troisième unité de programme comprenant un troisième identifiant d'unité et comportant en outre une liste comprenant au moins le premier identifiant d'unité et le deuxième identifiant d'unité, selon lequel lorsque le décodeur reçoit une commande de lecture de la troisième unité de programme, il procède à l'affichage sur l'écran successivement des premier et deuxième contenus audio/vidéos compris dans les première et deuxième unités de programme, en fonction de données présentes dans le premier champ de métadonnées de la troisième unité de programme.

Dans des modes de réalisation, le procédé de transmission suivant l'invention comporte en outre une ou plusieurs des caractéristiques suivantes :
- le premier champ de métadonnées de la troisième unité de programme fournit au moins une valeur de paramètre indiquant que :
   - la lecture successivement des premier et deuxième contenus audio/vidéos est une lecture en boucle ou une lecture unitaire ; et/ou
   - l'ordre de lecture est aléatoire ou non ;
- dans la liste dans la troisième unité de programme, au moins un code respectif est associé au premier identifiant d'unité un code respectif est associé au deuxième identifiant d'unité, chacun de ces codes indiquant :
   a/ un mode de lecture spécifique autorisé ou interdit parmi un saut de lecture ou une lecture accélérée ; et/ou
   b/ un caractère obligatoire ou facultatif de l'unité auquel le code est associé ; et/ou
   c/ un saut de l'unité auquel le code est associé et une condition déterminée à vérifier ;
   d/ une action à réaliser, l'identifiant d'unité d'une unité de programme distincte des première, deuxième et troisième unités, et optionnellement l'identification d'une commande ;
selon lequel lorsque le code associé à une unité parmi les première et deuxième unités indique le cas a /, le décodeur, lors de la lecture du contenu audio/vidéo de ladite unité, autorise ou interdit un saut de lecture ou une lecture accélérée en fonction de la valeur dudit code ; et/ou
selon lequel lorsque le code associé à une unité parmi les première et deuxième unités indique le cas b /, le décodeur autorise ou interdit la lecture d'un seul des contenus audio/vidéo parmi les premier et deuxième contenus audio/vidéos lorsque que l'autre des contenus audio/vidéo n'est pas disponible ; et/ou
selon lequel lorsque le code associé à une unité parmi les première et deuxième unités indique le cas c/, le décodeur teste la condition déterminée et saute la lecture de l'unité lorsque la condition est vérifiée ; et/ou
selon lequel lorsque le code associé à une unité parmi les première et deuxième unités indique le cas d /, le décodeur réalise une action relativement à l'autre unité de programme identifiée, optionnellement sous condition de réception de la commande identifiée ;
- lorsque le code associé à une unité parmi les première et deuxième unités indique le cas c/, la condition déterminée porte sur :
   - la disponibilité de l'autre unité parmi les première et deuxième unités ; et/ou
   - une sélection déjà effectuée par l'utilisateur d'une unité de programme distincte des première, deuxième et troisième unités ; et/ou
   - un contenu audio/vidéo d'une unité de programme distincte des première, deuxième et troisième unités ; et/ou
   - la comparaison d'une liste prédéterminée de zones géographiques avec un code identifiant la localisation géographique de du décodeur ;
- la première unité de programme comporte une image fixe, et la liste de la troisième unité comporte une valeur de durée en correspondance avec l'identifiant de la première unité, et selon lequel le décodeur est adapté pour afficher, lors de la lecture de la troisième unité de programme, l'image de la première unité pendant une durée égale à ladite valeur ;
- l'action comprend la lecture ou la suppression de l'autre unité de programme identifiée ;
- le flux de diffusion comporte une quatrième unité de programme indiquant un identifiant d'une unité de programme distincte de la quatrième unité de programme ; et selon lequel le décodeur, suite à la réception de ladite quatrième unité de programme, remplace des métadonnées dans le premier champ de l'unité de programme distincte de la quatrième unité de programme par des métadonnées comprises dans la quatrième unité de programme ;
- le flux de diffusion comporte une commande de suppression indiquant un identifiant d'unité de programme et selon lequel le décodeur supprime l'unité ainsi identifiée sur réception de ladite commande ; et/ou selon lequel le flux de diffusion comporte une commande de suppression indiquant une date déterminée et selon lequel le décodeur supprime les unités de programmes mémorisées indiquant une date antérieure à la date déterminée ;
- le premier champ de métadonnées des unités de programme comporte un sous-champ indiquant un caractère « visible » ou « caché » ; et selon lequel le décodeur affiche dans un menu proposant des programmes, des informations du premier sous-champ uniquement pour les unités comportant un sous-champ indiquant un caractère « visible » ;
- sur sélection d'une zone présentant sur l'écran des informations relatives à une unité de programme, le décodeur affiche sur l'écran le contenu audio/vidéo compris dans ladite unité de programme ;
- le premier champ de métadonnées des unités de programme comporte un sous-champ indiquant une date de suppression ; et selon lequel le décodeur supprime des unités de programme en fonction des dates respectives indiquées dans lesdits sous-champs.

Suivant un deuxième aspect, l'invention a pour objet un décodeur adapté pour recevoir des programmes de vidéo à la demande de type « Push » et apte à être connecté à un écran d'affichage, ledit décodeur comportant une mémoire et des moyens de réception, depuis un réseau de diffusion, d'un flux de diffusion comportant des unités de programmes de vidéo à la demande de type « Push », chaque unité de programme comprenant au moins un premier champ respectif de métadonnées comportant un identifiant d'unité et optionnellement un deuxième champ comprenant un contenu audio/vidéo, le décodeur étant adapté pour stocker lesdites unités de programme, ledit décodeur étant **caractérisé en ce qu'i**l est adapté pour lorsqu'il reçoit une commande de lecture d'une troisième unité de programme, le flux de diffusion comportant une première unité de programme comprenant un premier identifiant d'unité et un premier contenu audio/vidéo, une deuxième unité de programme comprenant un deuxième identifiant d'unité et un deuxième contenu audio/vidéo, et une troisième unité de programme comprenant un troisième identifiant d'unité et comportant en outre une liste comprenant au moins le premier identifiant d'unité et le deuxième identifiant d'unité, commander l'affichage sur l'écran successivement des premier et deuxième contenus audio/vidéos compris dans les première et deuxième unités de programme, en fonction de données présentes dans le premier champ de métadonnées de la troisième unité de programme.

L'invention sera mieux comprise à la lecture de la description qui suit et à l'examen des figures qui l'accompagnent. Ces figures sont données à titre illustratif mais nullement limitatif de l'invention. Ces figures sont les suivantes :
- la figure 1 est une vue d'un système dans un mode de mise en oeuvre de l'invention ;
- la figure 2 est une vue d'une unité VoD comprenant une liste de lecture.

Dans un mode de réalisation, un système de vidéo à la demande fait intervenir de nombreux acteurs, parmi lesquels :
- des fournisseurs de contenus audiovisuels,
- un opérateur technique qui prépare, à partir des contenus audiovisuels, des métadonnées associées à chacun de ces contenus audiovisuels, et qui constitue à l'aide de chaque contenu et métadonnées associés, une unité VoD, code l'ensemble des unités VoD et prépare le flux à diffuser comportant ces unités VoD,
- l'opérateur de diffusion qui est en charge de la diffusion du flux, les utilisateurs propriétaires de décodeurs.

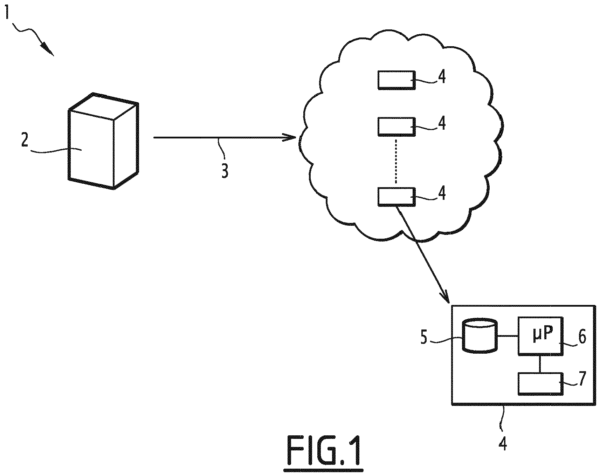

En référence à la figure 1, on considère un système 1 de vidéo à la demande de type Push dans une représentation simplifiée, dans lequel un serveur 2 est adapté pour constituer les éléments de vidéo à la demande et pour les diffuser, via un réseau de diffusion 3, sous la forme d'un flux comportant des fichiers de diffusion VoD et le cas échéant, comportant en outre des programmes courants de diffusion TV, à des décodeurs 4 d'utilisateurs.

Le réseau de diffusion 3 peut être par exemple un réseau de diffusion de télévision numérique de type MPEG ou DVB. Dans le cas présent, le réseau de diffusion 3 est un réseau de radiodiffusion numérique terrestre (en anglais « Digital Video Broadcasting »).

Les décodeurs 4 comportent chacun un disque dur 5 de stockage de données, un microprocesseur 6 et une carte à puce 7. Ils sont adaptés pour recevoir le flux de diffusion, extraire des unités VoD à partir des fichiers de diffusion VoD, stocker les unités VoD sur le disque dur 5, et ultérieurement les traiter de manière à rendre visualisables sur un écran d'affichage des informations relatives à des contenus audio/vidéos présents dans les unités VoD et/ou des contenus eux-mêmes.

L'écran d'affichage est par exemple un écran de télévision relié au décodeur 4. Les métadonnées sont stockées en clair dans une base de données sur le disque dur 5, en correspondance avec un identifiant de l'unité VoD auxquelles elles appartiennent. Dans certains cas, un contenu de type audio, vidéo ou image, présent dans une unité VoD est stocké sous forme chiffrée sous le disque dur et ne peut être « lu », ie déchiffré, puis restitué sur l'écran, que s'il a été acheté par l'utilisateur du décodeur 4.

On notera que certains des contenus audio, vidéo ou image, présents dans une unité VoD, ne sont pas sous forme chiffrée et sont librement accessibles à l'utilisateur, par exemple des contenus relatifs à des bandes-annonces, des affiches de films, des images ou audio/vidéo de publicités ...

L'achat peut être réalisé de différentes façons, par exemple par abonnement, et/ou transaction en ligne et/ou hors ligne.

Une fois l'achat réalisé, le décodeur 4 reçoit une autorisation qu'il stocke sur la carte à puce 7 et qui permet la mise en oeuvre du déchiffrage par le décodeur.

Le décodeur 4 est adapté pour déterminer, en fonction des métadonnées des unités VoD, des menus proposant des contenus des unités VoD disponibles stockés dans le disque dur 5 suite à la diffusion en mode « Push », et pour afficher ces menus sur un écran connecté au décodeur.

Sur un écran d'affichage peuvent apparaître des menus par exemple organisés par thèmes (films, documentaires, enfants, sport etc.), proposant des contenus achetables par l'utilisateur, et aussi des zones sur lesquelles, automatiquement, sans sélection de l'utilisateur, des contenus audio/vidéo sont lus et/ou des images sont affichées : par exemple des bandes-annonces, des publicités, des affiches de films...

Le décodeur 4 est en outre adapté pour lire/afficher ensuite sur l'écran un contenu présent ou référencé dans l'unité VoD correspondant à la sélection de l'utilisateur dans un menu (et après vérification par le décodeur des droits d'accès, comprenant notamment la vérification sur la carte à puce 7 de l'autorisation correspondante relative à l'utilisateur).

Le service de téléchargement des contenus de VoD de type Push peut être actif en permanence, ou pendant des fenêtres temporelles déterminées ou encore en fonction de la bande passante couramment disponible sur le réseau de diffusion 3. Dans un mode de réalisation, les décodeurs sont dynamiquement informés des périodes de diffusion, par des commandes reçues par l'intermédiaire du réseau 3 et sont adaptés pour surveiller la réception des unités VoD pendant ces périodes uniquement.

Le fichier de téléchargement d'une unité VoD, contenant de l'audio/vidéo est volumineux, typiquement plusieurs gigaoctets. Le fichier de téléchargement d'une unité VoD contenant seulement des métadonnées est typiquement de quelques mégaoctets.

Dans le mode de réalisation de l'invention décrit, une unité VoD en-dehors des unités VoD ne contenant que des métadonnées et ne contenant pas d'image ou d'audio/vidéo ou de liste de lecture comprend un élément définissant un contenu directement ou indirectement, par exemple un film, un documentaire etc. Dans un mode de réalisation, une telle unité VoD est de nature « atomique », c'est-à-dire que si elle n'est pas stockée en totalité ou selon un seuil de qualité paramétrable déterminé sur le disque dur, elle est considérée comme non disponible dans les menus et ne peut pas être lue.

Une unité VoD est définie de façon unique par un identifiant d'unité VoD, par exemple un nombre codé sur 32 bits.

Une unité VoD comprend, outre son identifiant,
- un contenu dynamique, apte à être lu, comportant :
   o une séquence audio/vidéo, ou
   o une liste de lecture, comprenant une liste ordonnée d'identifiants d'autres unités VoD ;
- un contenu statique, qui peut être affiché au moins partiellement, comportant :
   o une image ou un ensemble d'image, et/ou
   o un ensemble de métadonnées.

Dans un mode de réalisation, le contenu dynamique comporte une et une seule séquence audio/vidéo, ou une liste de lecture, mais pas les deux, de sorte que la commande de lecture de l'unité VoD n'est pas ambiguë.

Une séquence audio/vidéo comporte une piste vidéo et/ou un nombre quelconque de pistes audio et de sous-titres.

Une unité VoD peut ne pas comporter de contenu dynamique, mais uniquement un contenu statique avec une image de type fond d'écran ou image publicitaire, qui pourra par exemple être utilisé comme image de fond pour afficher des menus sur l'écran.

Une unité VoD peut ne pas comporter de contenu dynamique, ni d'image.

L'unité VoD comporte obligatoirement un ensemble de métadonnées. Le seul élément nécessaire dans les métadonnées de l'unité VoD, est l'identifiant d'unité VoD. Dans un mode de réalisation, un identifiant d'unité VOD est non modifiable.

Certaines des métadonnées sont de nature informationnelle, pour affichage sur l'écran. D'autres métadonnées ont un impact technique sur la vie de l'unité VoD.

Les métadonnées peuvent être classées en plusieurs catégories et sous-catégories et peuvent comprendre :
- Informations éditoriales relatives au contenu : titre, description, acteurs, producteur, date de production, chapitres ...
- Information de classification, par exemple fonction de lois locales : contrôle parental, âge minimum, classification du contenu ...
- Informations commerciales : prix d'achat de l'unité VoD, lien vers des lots commerciaux dont l'élément VoD fait partie...
- Informations techniques :
   o caractère « visible » ou « caché » (en fonction du caractère indiqué, le décodeur rendra l'unité VoD explicitement visible et sélectionnable dans les menus du décodeur destinés à l'utilisateur, ou non ; les unités VoD « cachés » sont des objets référencés ailleurs qui ne sont pas sélectionnables directement par l'utilisateur : images simples, bandeau publicitaire etc.) ;
   o durée de la lecture, format audio/vidéo ;
   o date de suppression (le décodeur supprimera l'unité VoD à un moment déterminé en fonction de cette date) ;
   o identification du fournisseur du contenu ;
   o dates et décompte des diffusions de l'unité VoD vers le décodeur, qualité minimale acceptée de téléchargement.
- Références à d'autres unités VoD (par exemple quand l'unité VoD courante est la bande-annonce d'une ou d'autre(s) unités VoD).
- Contrôle d'accès : identification du type d'abonnement requis le cas échéant, ou indication qu'un achat séparé est nécessaire ; critères d'accès techniques additionnels.
- Contrôle d'utilisation :
   ○ Fenêtre temporelle autorisée pour l'achat ou la sélection de l'unité VoD (le décodeur 4 est adapté pour n'autoriser l'achat ou la sélection de cette unité que pendant cette fenêtre temporelle) ;
   ○ Durée maximum de mise à disposition de l'unité VoD pour lecture, et/ou nombre maximum de lectures autorisé (le décodeur 4 est adapté pour arrêter la mise à disposition de l'unité dans les menus et/ou des zones d'écran si ces seuils maximum sont dépassés).
   ○ Date d'expiration (le décodeur 4 est adapté pour arrêter la mise à disposition de l'unité dans les menus et/ou des zones d'écran si la date d'expiration est dépassée).

Dans un mode de réalisation, le décodeur 4 pour une unité VoD « visible » de type audio/vidéo, par exemple comportant une séquence audio/vidéo (un film) et une image (par exemple l'affiche du film), est adapté pour afficher dans des menus les informations éditoriales et de classification, ainsi que l'image. Puis sur sélection par l'utilisateur de cette unité VoD à partir de cet affichage, il traite le contenu audio/vidéo de l'unité VoD de manière à le restituer sur l'écran, moyennant les vérifications de contrôle d'accès etc.

Dans un mode de réalisation, les métadonnées d'une unité VoD prennent la forme d'un fichier XML, dans lequel chaque type distinct d'information est repéré par un identifiant respectif similaire d'une unité VoD à l'autre (par exemple, la valeur de la durée maximum sera fournie dans toutes les unités VoD après une balise d'identification de champ).

Comme indiqué ci-dessus, plutôt que de comporter du contenu audio/vidéo, une unité VoD peut contenir une liste de lecture d'un contenu d'une autre, ou d'autres, unité(s) VoD. Lire une telle unité VoD de type liste de lecture signifie lire le contenu identifié par chaque entrée de la liste. Une entrée de la liste comporte l'identifiant d'une autre unité VoD et la spécification du contenu à lire/afficher dans cette autre unité. Ceci constitue un mécanisme pour créer sur l'écran des bandeaux dynamiques de publicité, de bandes-annonces etc.

Quand une liste de lecture référence une image d'une autre unité VoD, elle indique en outre une durée d'affichage de l'image.

Par exemple, une liste de lecture est définie ainsi :
- afficher l'image « publicité » de l'unité VoD 101 pendant 5 secondes ;
- afficher l'image « publicité » de l'unité VoD 102 pendant 3 secondes ;
- afficher le contenu dynamique de l'unité VoD 103 (ici la durée dépend en fait du contenu).

Un décodeur 4 lors de la restitution d'une telle unité VoD, est adapté pour conformément à ces caractéristiques indiquées dans l'unité VoD, afficher l'image « publicité » de l'unité VoD 101 pendant 5 secondes ; afficher l'image « publicité » de l'unité VoD 102 pendant 3 secondes ; et afficher le contenu dynamique de l'unité VoD 103, dans cet ordre ou un autre (voir ci-dessous).

Lorsqu'une unité VoD de type liste est diffusée vers un décodeur 4 et y est stockée, il est possible qu'au moins une des unités VoD référencée dans la liste ne soit pas encore diffusée.

Par ailleurs, une même unité VoD peut être référencée dans plusieurs listes de lecture.

Les métadonnées d'une unité VoD du type liste de lecture peuvent comprendre en outre les caractéristiques suivantes, indiquées dans des champs du fichier XML qui leur sont respectivement affectés :
- «boucle» (par exemple quand la valeur « 1 » est renseignée dans le champ correspondant à la balise « boucle ») : dans ce cas, lorsque la dernière unité VoD de la liste a été lue/affichée, le décodeur 4 reprend la lecture à partir de la première unité de la liste (sinon si cette caractéristique « boucle » n'est pas sélectionnée, ie quand la valeur « 0 » est renseignée dans le champ correspondant à la balise « boucle » : la lecture s'arrête).
- « ordre aléatoire » : à la place de lire séquentiellement un contenu de chaque unité VoD de la liste de lecture dans l'ordre de la liste, le contenu de chaque unité VoD est lu une fois par le décodeur 4 dans un ordre aléatoire, avant de terminer la lecture (ou la réitérer, si la caractéristique de boucle est indiquée).

En outre, dans l'unité VoD de type liste de lecture, les particularités suivantes peuvent être indiquées ou non relativement à chaque entrée dans la liste de lecture, par exemple en indiquant des codes déterminés dans des champs spécifiques :
- modes spéciaux de lectures, ie les lectures autres que la lecture à vitesse normale d'un contenu vidéo (avance rapide, saut de lecture, etc ; en anglais « trick-mode ») sont autorisés/ sont interdits : par exemple, dans le cas d'une liste de lecture comportant deux entrées relatives à des vidéos de type publicité et un film, il peut être indiqué que le mode de lecture normal n'est pas modifiable pour les vidéos de type publicité, mais qu'il est modifiable pour le film. Ainsi les commandes de l'utilisateur du décodeur 4 seront prises en compte par le décodeur 4 uniquement lors de la lecture du film, mais pas lors de la lecture des vidéos de type publicité.
- Des unités VoD listées peuvent être indiquées comme items obligatoires, ou comme items facultatifs. Ainsi lors qu'une unité VoD de type liste de lecture est diffusée et stockée dans un décodeur, tant que les unités VoD listées dans cette liste et indiquées obligatoires ne sont pas elles-mêmes stockées dans le décodeur, la liste de lecture est considérée comme non disponible par le décodeur 4. En revanche, s'il ne manque que des unités VoD indiquées facultatives, la liste peut être lue par le décodeur 4, en omettant les unités manquantes. Ainsi dans une liste de lecture comportant une référence indiquée obligatoire au film d'une autre unité VoD, et une référence indiquée facultative à une séquence publicitaire d'une encore autre unité VoD, la liste de lecture sera accessible à l'utilisateur via le menu même si l'unité VoD comportant la séquence de publicité n'a pas encore été téléchargée dans le décodeur.
- Saut d'une entrée si une autre entrée est manquante. Par exemple, dans une liste de lecture de type bandes-annonces, au moins une entrée est une bande-annonce de film, tandis que d'autres entrées sont des publicités. Il peut être ainsi possible de ne pas diffuser les entrées de publicité si la bande-annonce manque.
- Saut d'une entrée si une autre entrée est présente.
- Saut d'une entrée si une autre unité VoD a déjà été lue et/ou achetée par l'utilisateur. Dans une liste de lecture de type bandes-annonces, si l'unité VoD comportant le film correspondant à une des bandes-annonces indiquées dans la liste a déjà été lue par l'utilisateur, il n'est pas nécessaire de lire la bande-annonce.
- Saut d'une entrée si une autre unité VoD n'a pas déjà été lue et/ou achetée par l'utilisateur.
- Saut d'une entrée si une autre unité VoD n'a pas de contenu dynamique vidéo.
- Saut d'une entrée si une autre unité VoD a un contenu dynamique vidéo.
- Lire l'entrée seulement si le code géographique de la zone de l'utilisateur (qui peut être connu par le décodeur par exemple en lisant la carte à puce 7) est dans une liste prédéfinie de codes.
- Ne pas lire l'entrée si le code géographique de la zone de l'utilisateur est dans une liste prédéfinie de codes.
- Effectuer une action sur une autre unité VoD quand, une entrée déterminée de la liste de lecture étant jouée, l'utilisateur appuie sur une touche spécifique, par exemple de la télécommande du décodeur ou sélectionne une commande spécifique sur l'écran. Par exemple, quand une liste de lecture comportant des entrées correspondant à des unités VoD de bandes annonces et de publicité est lue, l'utilisateur peut donner lieu à la fourniture du film (via l'unité VoD comportant le contenu correspondant) simplement en sélectionnant une touche spéciale pendant la diffusion de la bande-annonce de ce film. Des actions différentes peuvent être déclenchées sur la base d'une même entrée de la liste par la sélection de deux touches distinctes déterminées. Ainsi dans la liste de lecture, il est défini pour une entrée déterminée :
   - dans un champ correspondant à l'action, quelle action doit être réalisée (lecture d'une unité VoD, achat),
   - dans un champ correspondant à l'identification d'unité VoD, il est indiqué sur quelle unité VoD, repérée par son identifiant, doit porter cette action, et
   - dans un champ correspondant à la touche, s'il n'est rien indiqué, cela signifie que l'action est réalisée pour tout appui touche, si une touche particulière est spécifiée, l'action ne sera réalisée que si la touche particulière est pressée.

De telles listes de lecture permettent de définir de façon souple et évolutive des interactions et des services de VoD sans avoir à modifier le logiciel du décodeur.

Un flux de diffusion d'unités VoD, en mode Push, peut comporter des unités VoD avec un contenu dynamique et/ou des unités VoD ne comportant que des images et/ou des métadonnées. Ces dernières peuvent être des unités VoD dites de mise à jour, diffusées en vue de mettre à jour certaines ou toutes les métadonnées (en-dehors de celles relatives au contrôle d'accès) et/ou des images d'autres unités VoD déjà diffusées et stockées dans les décodeurs. On les appelle séquences de mise à jour d'autres unités VoD.

Des séquences de mise à jour comprennent des unités VoD ne comprenant pas de contenus audio/vidéos, mais uniquement des métadonnées accompagnées ou non d'images, et/ou des commandes destinés aux décodeurs 4.

Ces commandes comprennent par exemple la commande de :
- la suppression d'un certain nombre d'unités VoD repérées par leur identifiant ;
- la suppression des unités VoD plus vielles qu'une date spécifiée dans la commande ;
- la mise en place d'une piste audio de fond dans un contexte spécifique tel qu'un menu, la commande spécifiant alors l'identifiant de l'unité VoD comportant la piste audio et spécifiant également l'identifiant du contexte, par exemple du menu concerné. Si aucun menu n'est spécifié, la piste audio sera retenue comme musique de fond jouée lors de l'affichage de tous les menus par les décodeurs 4 ;
- la mise en place d'une image de fond dans un contexte spécifique tel qu'un menu, la commande spécifiant alors l'identifiant de l'unité VoD comportant l'image et spécifiant l'identifiant du contexte, par exemple du menu concerné. Si aucun menu n'est spécifié, l'image sera retenue comme image de fond lors de l'affichage de tous les menus par les décodeurs 4 ;
- la mise en place d'une liste de lecture courante dans un contexte spécifique, la commande spécifiant alors l'identifiant de l'unité VoD comportant la liste de lecture et spécifiant l'identifiant du contexte, par exemple un bandeau dans l'écran réservé aux bandes-annonces ou au publicité, à côté de la partie de l'écran réservée à l'affichage des menus proposant les contenus sélectionnables.

Le décodeur 4 est adapté pour traiter les unités VoD et lire/afficher le contenu audiovisuel contenu (ou auquel il est fait référence dans le cas d'une liste de lecture) en fonction des informations et contraintes stipulées dans les métadonnées de ces unités VoD.

Par exemple, si la qualité de téléchargement évaluée par le décodeur est inférieure au seuil de la qualité de téléchargement minimum indiquée dans les métadonnées d'une unité VoD, alors l'unité VoD est considérée comme non disponible par le décodeur.

Dans un mode de réalisation, il est possible que le fichier de diffusion d'une unité VoD soit diffusé et reçu plusieurs fois par un décodeur 4. Ce dernier est adapté pour reconstruire le contenu de l'unité VoD à partir de ces multiples diffusions, ce qui est utile quand des erreurs de transmission ont lieu à des endroits distincts à chaque diffusion.

Dans un mode de réalisation, les métadonnées d'une unité VoD sont diffusées plusieurs fois, sous forme de séquence de mise à jour de métadonnées, pour limiter le risque d'erreur dans les métadonnées des unités VoD.

Dans un mode de réalisation, par exemple, le décodeur 4 est adapté pour supprimer toutes les unités VoD dont la date de suppression renseignée dans les métadonnées est strictement inférieure à la date courante.

Une unité VoD peut être accessible librement dans le menu, ou accessible uniquement aux utilisateurs de décodeurs ayant souscrit un abonnement particulier et/ou accessible suite à un achat de l'unité elle-même. Ces modalités définies par l'opérateur sont spécifiées dans les métadonnées (partie « contrôle d'accès »).

L'identification d'un abonnement souscrit par l'utilisateur est enregistrée dans la carte à puce 7 du décodeur 4. De même, lorsque qu'un utilisateur achète une unité VoD, une autorisation correspondante prenant la forme par exemple d'un numéro de session identifiant l'unité VoD est enregistrée dans la carte à puce 7. Donc lorsque l'utilisateur sélectionne depuis le menu affiché une unité VoD non librement accessible, le décodeur compare les modalités d'accès à l'unité VoD définies dans ses métadonnées aux informations stockées dans la carte à puce et lit/affiche le contenu sélectionné seulement si il y a correspondance. Dans un mode de réalisation, le contenu audio/vidéo de l'unité VoD transmis sur le réseau de diffusion est stocké dans le décodeur 4 sous forme cryptée et n'est décrypté par le décodeur 4 à l'aide d'au moins une clé stockée dans la carte à puce que s'il y a correspondance.

Dans un mode de réalisation, les métadonnées relatives au contrôle d'accès ne peuvent pas être mises à jour par la réception par le décodeur de séquences de mise à jour de métadonnées. Ainsi une fois le contenu audio/vidéo crypté et poussé vers les décodeurs, il n'y a plus possibilité de modifier les critères d'accès au contenu. Pour ce faire, le contenu doit être recrypté selon les nouveaux critères d'accès et renvoyé à tous les décodeurs comme nouvelle unité VoD.

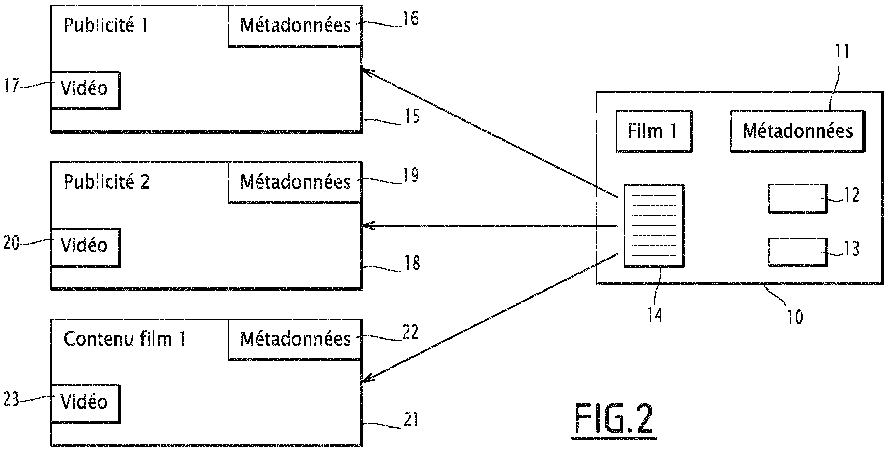

En référence à la figure 2, la création d'unités VoD est décrite.

Une unité vidéo 21 « contenu Film 1 » est créée. Elle comporte le contenu audio/vidéo 23 d'un film nommé « film 1 » et des métadonnées 22.

Ces métadonnées comportent diverses informations nécessaires dont un identifiant unique et des informations qui définissent que l'unité vidéo est « cachée » des menus des décodeurs.

Une unité VoD « publicité 1» 15 est créée. Elle comporte le contenu audio/vidéo 17 d'une vidéo d'une publicité et des métadonnées 16 comportant diverses informations nécessaires dont un identifiant unique et des informations qui définissent que l'unité vidéo 15 est « cachée » des menus des décodeurs.

Une unité VoD « publicité 2» 18 est créée. Elle comporte le contenu audio/vidéo 20 d'une vidéo d'une publicité et des métadonnées 19 comportant diverses informations nécessaires dont un identifiant unique et des informations qui définissent que l'unité vidéo 18 est « cachée » des menus des décodeurs.

Une unité VoD « Film 1» 10 est créée. Elle comporte une liste de lecture 14 et des métadonnées 11 comportant diverses informations nécessaires dont un identifiant unique et des informations qui définissent que l'unité vidéo 10 est « visible » dans les menus des décodeurs, ainsi que des informations éditoriales sur le film 1.

La liste de lecture 14 comporte trois entrées.

La première entrée comporte l'identifiant de l'unité VoD 15 « publicité 1 », la spécification de l'élément à lire, qui est la vidéo 17, dans cette unité VoD, la caractéristique « trick-mode interdit » et la caractéristique « item facultatif ».

La deuxième entrée comporte l'identifiant de l'unité VoD 18 « publicité 2», la spécification de l'élément à y lire, qui est la vidéo 20, la caractéristique « trick-mode interdit » et la caractéristique « item facultatif ».

La troisième entrée comporte l'identifiant de l'unité VoD 21 « contenu Film 1», la spécification de l'élément à y lire, qui est la vidéo 23, la caractéristique « trick-mode autorisé » et la caractéristique « item obligatoire ».

Ainsi dans le menu des contenus visualisables et sélectionnables proposé par le décodeur 4 à l'utilisateur ne sera visible que l'unité VoD 10, mais non les unités VoD 15, 18,21.

L'unité VoD 10 sera rendue visualisable par le décodeur même si les unités VoD 15 et/ou 18 ne sont pas disponibles sous réserve que l'unité VoD 21 soit, elle, disponible.

On entend par disponible notamment que l'unité VoD soit stockée par le décodeur, avec une qualité de chargement jugée satisfaisante.

Si l'utilisateur fournit au décodeur une commande de sélection de cette unité 10 au décodeur à partir du menu présentant l'unité et affichant par exemple certaines des informations éditoriales, alors le décodeur lira la vidéo 17, puis la vidéo 20, puis la vidéo 23.

Le décodeur n'autorisera pas de saut ou de lecture rapide des vidéos 17 et 20, mais l'autorisera pour la vidéo 23.

Dans le menu proposé par un décodeur en fonction des unités VoD qu'il a reçues, il figure dans un mode de réalisation un programme de bandes-annonces.

Supposons que la semaine 1, on fasse la promotion dans ce programme de deux bandes annonces BA1 et BA2, et que la semaine 2, on y fasse la promotion de la bande-annonce BA2 et d'une autre bande-annonce BA3.

Avant la semaine 1, l'unité VoD « film 1 » comportant le contenu audio/vidéo du film « film 1 » correspondant à la bande annonce BA1, l'unité VoD « BA1 » comportant le contenu audio/vidéo de la bande-annonce du film « film 1 », l'unité VoD « film 2 » comportant le contenu audio/vidéo du film « film 2 » correspondant à la bande annonce BA2 et l'unité VoD « BA2 » comportant le contenu audio/vidéo de la bande-annonce du film « film 2 » ont été diffusées à destination des décodeurs 4.

Une unité VoD « programme de bandes-annonces 1 » est aussi diffusée.

Elle comporte une liste de lecture, avec une caractéristique « boucle » sur les entrées i définies de la façon suivante dans la liste, avec i = 1 à 2 :
- identifiant de l'unité VoD : BAi,
- élément à jouer : contenu audio/vidéo de la bande-annonce du film « film i »,
- « trick-mode interdit »,
- lire seulement si l'unité VoD « film i » est disponible,
- lire seulement si l'unité VoD « film i » n'a pas déjà été sélectionnée et/ou achetée par l'utilisateur.

Au début de la semaine 1, une commande est diffusée aux décodeurs via le réseau 3 leur commandant de proposer dans leurs menus le programme de bandes-annonces correspondant à l'unité VoD « programme de bandes-annonces 1 ».

Pendant la semaine 1, une unité VoD « programme de bandes-annonces 2 » est aussi diffusée, ainsi que l'unité VoD « film 3 » comportant le contenu audio/vidéo du film « film 3 » correspondant à la bande annonce BA3 et l'unité VoD « BA3 » comportant le contenu audio/vidéo de la bande-annonce du film « film 3».

Une unité VoD « programme de bandes-annonces 2 » est aussi diffusée.

Elle comporte une liste de lecture, avec une caractéristique « boucle » sur les entrées i définies de la façon suivante dans la liste, avec i = 2 à 3 :
- identifiant de l'unité VoD : BAi,
- élément à jouer : contenu audio/vidéo de la bande-annonce du film « film i »,
- « trick-mode interdit »,
- lire seulement si l'unité VoD « film i » est disponible,
- lire seulement si l'unité VoD « film i » n'a pas déjà été sélectionnée et/ou achetée.

Dans un autre mode de réalisation, en remplaçant les bandes-annonces par des images, il est possible de créer un programme de promotion pour des films à l'aide d'une unité VoD de type liste de lecture se référant à des unités VoD comportant des images de films.

## Revendications

1. Procédé de transmission de programmes de vidéo à la demande de type « Push », comprenant les étapes selon lesquelles :
- on transmet depuis un serveur distant (2) sur un réseau de diffusion (3) et à destination d'une pluralité de décodeurs (4) aptes à être connectés à des écrans d'affichage, un flux de diffusion comportant des unités de programmes de vidéo à la demande de type « Push », chaque unité de programme comprenant au moins un premier champ respectif de métadonnées comportant un identifiant d'unité et optionnellement un deuxième champ comprenant un contenu audio/vidéo,
- les unités de programme sont stockées en mémoire par chaque décodeur ; **caractérisé en ce que** le flux de diffusion comporte une première unité de programme (15) comprenant un premier identifiant d'unité et un premier contenu audio/vidéo (17), une deuxième unité de programme (18) comprenant un deuxième identifiant d'unité et un deuxième contenu audio/vidéo (20), et une troisième unité de programme (10) comprenant un troisième identifiant d'unité et comportant en outre une liste (14) comprenant au moins le premier identifiant d'unité et le deuxième identifiant d'unité,
selon lequel lorsque le décodeur reçoit une commande de lecture de la troisième unité de programme, il procède à l'affichage sur l'écran successivement des premier et deuxième contenus audio/vidéos compris dans les première et deuxième unités de programme, en fonction de données présentes dans le premier champ de métadonnées de la troisième unité de programme.

2. Procédé de transmission selon la revendication 1, selon lequel le premier champ de métadonnées de la troisième unité de programme fournit au moins une valeur de paramètre indiquant que :
- la lecture successivement des premier et deuxième contenus audio/vidéos est une lecture en boucle ou une lecture unitaire ; et/ou
- l'ordre de lecture est aléatoire ou non.

3. Procédé de transmission selon la revendication 1 ou 2, selon lequel dans la liste dans la troisième unité de programme, au moins un code respectif est associé au premier identifiant d'unité et/ou un code respectif est associé au deuxième identifiant d'unité, chacun de ces codes indiquant :
a/ un mode de lecture spécifique autorisé ou interdit parmi un saut de lecture ou une lecture accélérée ; et/ou
b/ un caractère obligatoire ou facultatif de l'unité auquel le code est associé ; et/ou
c/ un saut de l'unité auquel le code est associé et une condition déterminée à vérifier ;
d/ une action à réaliser, l'identifiant d'unité d'une unité de programme distincte des première, deuxième et troisième unités, et optionnellement l'identification d'une commande ;
selon lequel lorsque le code associé à une unité parmi les première et deuxième unités indique le cas a /, le décodeur, lors de la lecture du contenu audio/vidéo de ladite unité, autorise ou interdit un saut de lecture ou une lecture accélérée en fonction de la valeur dudit code ; et/ou
selon lequel lorsque le code associé à une unité parmi les première et deuxième unités indique le cas b /, le décodeur autorise ou interdit la lecture d'un seul des contenus audio/vidéo parmi les premier et deuxième contenus audio/vidéos lorsque que l'autre des contenus audio/vidéo n'est pas disponible ; et/ou
selon lequel lorsque le code associé à une unité parmi les première et deuxième unités indique le cas c/, le décodeur teste la condition déterminée et saute la lecture de l'unité lorsque la condition est vérifiée ; et/ou
selon lequel lorsque le code associé à une unité parmi les première et deuxième unités indique le cas d /, le décodeur réalise une action relativement à l'autre unité de programme identifiée, optionnellement sous condition de réception de la commande identifiée.

4. Procédé de transmission selon la revendication 3, selon lequel lorsque le code associé à une unité parmi les première et deuxième unités indique le cas c/, la condition déterminée porte sur :
- la disponibilité de l'autre unité parmi les première et deuxième unités ; et/ou
- une sélection déjà effectuée par l'utilisateur d'une unité de programme distincte des première, deuxième et troisième unités ; et/ou
- un contenu audio/vidéo d'une unité de programme distincte des première, deuxième et troisième unités ; et/ou
- la comparaison d'une liste prédéterminée de zones géographiques avec un code identifiant la localisation géographique de du décodeur.

5. Procédé de transmission selon l'une quelconque des revendications précédentes, selon lequel la première unité de programme comporte une image fixe, et la liste de la troisième unité comporte une valeur de durée en correspondance avec l'identifiant de la première unité, et selon lequel le décodeur est adapté pour afficher, lors de la lecture de la troisième unité de programme, l'image de la première unité pendant une durée égale à ladite valeur.

6. Procédé de transmission selon l'une des revendications 3 à 4, selon lequel l'action comprend la lecture ou la suppression de l'autre unité de programme identifiée.

7. Procédé de transmission selon l'une quelconque des revendications précédentes, selon lequel le flux de diffusion comporte une quatrième unité de programme indiquant un identifiant d'une unité de programme distincte de la quatrième unité de programme ; et selon lequel le décodeur, suite à la réception de ladite quatrième unité de programme, remplace des métadonnées dans le premier champ de ladite unité de programme distincte de la quatrième unité de programme par des métadonnées comprises dans la quatrième unité de programme.

8. Procédé de transmission selon l'une quelconque des revendications précédentes, selon lequel le flux de diffusion comporte une commande de suppression indiquant un identifiant d'unité de programme et selon lequel le décodeur supprime l'unité ainsi identifiée sur réception de ladite commande ; et/ou
selon lequel le flux de diffusion comporte une commande de suppression indiquant une date déterminée et selon lequel le décodeur supprime les unités de programmes mémorisées indiquant une date antérieure à la date déterminée.

9. Procédé de transmission selon l'une quelconque des revendications précédentes, selon lequel le premier champ de métadonnées des unités de programme comporte un sous-champ indiquant un caractère « visible » ou « caché » ; et selon lequel le décodeur affiche dans un menu proposant des programmes, des informations du premier sous-champ uniquement pour les unités comportant un sous-champ indiquant un caractère « visible ».

10. Procédé de transmission selon la revendication 9, selon lequel sur sélection d'une zone présentant sur l'écran des informations relatives à une unité de programme, le décodeur affiche sur l'écran le contenu audio/vidéo compris dans ladite unité de programme.

11. Procédé de transmission selon l'une quelconque des revendications précédentes, selon lequel le premier champ de métadonnées des unités de programme comporte un sous-champ indiquant une date de suppression ; et selon lequel le décodeur supprime des unités de programme en fonction des dates respectives indiquées dans lesdits sous-champs.

12. Décodeur adapté pour recevoir des programmes de vidéo à la demande de type « Push » et apte à être connecté à un écran d'affichage, ledit décodeur comportant une mémoire et des moyens de réception, depuis un réseau de diffusion (3), d'un flux de diffusion comportant des unités de programmes de vidéo à la demande de type « Push », chaque unité de programme comprenant au moins un premier champ respectif de métadonnées comportant un identifiant d'unité et optionnellement un deuxième champ comprenant un contenu audio/vidéo, le décodeur étant adapté pour stocker lesdites unités de programme, ledit décodeur étant **caractérisé en ce qu'i**l est adapté pour lorsqu'il reçoit une commande de lecture d'une troisième unité de programme, le flux de diffusion comportant une première unité de programme (15) comprenant un premier identifiant d'unité et un premier contenu audio/vidéo (17), une deuxième unité de programme (18) comprenant un deuxième identifiant d'unité et un deuxième contenu audio/vidéo (20), et une troisième unité de programme (10) comprenant un troisième identifiant d'unité et comportant en outre une liste (14) comprenant au moins le premier identifiant d'unité et le deuxième identifiant d'unité, commander l'affichage sur l'écran successivement des premier et deuxième contenus audio/vidéos compris dans les première et deuxième unités de programme, en fonction de données présentes dans le premier champ de métadonnées de la troisième unité de programme.

13. Décodeur selon la revendication 12, adapté pour, en fonction d'une valeur de paramètre du premier champ de métadonnées de la troisième unité de programme :
- lire successivement les premier et deuxième contenus audio/vidéos en boucle ou une seule fois ; et/ou
- utiliser un ordre de lecture des premier et deuxième contenus audio/vidéos aléatoire ou non.

14. Décodeur selon la revendication 12 ou 13, adapté pour déterminer dans la liste dans la troisième unité de programme, au moins une valeur d'un code respectif associé au premier identifiant d'unité et/ou au moins un code respectif étant associé au deuxième identifiant d'unité,
le décodeur étant adapté pour :
- en fonction de la valeur dudit code déterminée, autoriser ou interdire un saut de lecture ou une lecture accélérée lors de la lecture du contenu audio/vidéo de ladite unité ; et/ou
- en fonction de la valeur dudit code déterminée, autoriser ou interdire la lecture d'un seul des contenus audio/vidéo parmi les premier et deuxième contenus audio/vidéos lorsque que l'autre des contenus audio/vidéo n'est pas disponible ; et/ou
- en fonction de la valeur dudit code déterminée, tester une condition déterminée et sauter la lecture de l'unité lorsque la condition est vérifiée ; et/ou
- en fonction de la valeur dudit code déterminée, réaliser une action relativement à l'autre unité de programme identifiée par ladite valeur, optionnellement sous condition de réception d'une commande identifiée par ladite valeur.

15. Décodeur selon la revendication 14, dans lequel la condition déterminée porte sur:
- la disponibilité de l'autre unité parmi les première et deuxième unités ; et/ou
- une sélection déjà effectuée par l'utilisateur d'une unité de programme distincte des première, deuxième et troisième unités ; et/ou
- un contenu audio/vidéo d'une unité de programme distincte des première, deuxième et troisième unités ; et/ou
- la comparaison d'une liste prédéterminée de zones géographiques avec un code identifiant la localisation géographique du décodeur.

16. Décodeur selon l'une quelconque des revendications 12 à 15, adapté pour, la première unité de programme comportant une image fixe, déterminer, dans la liste de la troisième unité, une valeur de durée en correspondance avec l'identifiant de la première unité, et afficher, lors de la lecture de la troisième unité de programme, l'image de la première unité pendant une durée égale à ladite valeur déterminée.

17. Décodeur selon l'une des revendications 14 à 15, dans lequel l'action comprend la lecture ou la suppression de l'autre unité de programme identifiée.

18. Décodeur selon l'une quelconque des revendications 12 à 17, adapté pour, suite à la réception d'une quatrième unité de programme incluse dans le flux de diffusion et indiquant un identifiant d'une unité de programme distincte de la quatrième unité de programme, remplacer des métadonnées dans le premier champ de ladite unité de programme distincte de la quatrième unité de programme par des métadonnées comprises dans la quatrième unité de programme.

19. Décodeur selon l'une quelconque des revendications 12 à 18, adapté pour, sur réception d'une commande de suppression dans le flux de diffusion, indiquant un identifiant d'unité de programme, supprimer l'unité ainsi identifiée ; et/ou adapté pour, sur réception d'une commande de suppression dans le flux de diffusion, indiquant une date déterminée, supprimer les unités de programmes mémorisées indiquant une date antérieure à la date déterminée.

20. Décodeur selon l'une quelconque des revendications 12 à 19, adapté pour, le premier champ de métadonnées des unités de programme comportant un sous-champ indiquant un caractère « visible » ou « caché », afficher dans un menu proposant des programmes, des informations du premier sous-champ d'une unité uniquement après vérification que l'unité comporte un sous-champ indiquant un caractère « visible ».

21. Décodeur selon la revendication 20, adapté, suite à identification d'une sélection d'une zone présentant sur l'écran des informations relatives à une unité de programme, afficher sur l'écran le contenu audio/vidéo compris dans ladite unité de programme.

22. Décodeur selon l'une quelconque des revendications 12 à 21, adapté pour déterminer une date de suppression indiquée dans un sous-champ du premier champ de métadonnées d'une unité de programme et pour supprimer au moins une unité de programme en fonction de la date déterminée.
